Europäisches Patentamt

(19) European Patent Office

Office européen des brevets

(11) Publication number: **0 189 985**

A1

(12) # EUROPEAN PATENT APPLICATION

(21) Application number: 86300216.8

(22) Date of filing: 15.01.86

(51) Int. Cl.⁴: **G 01 N 21/89**
**G 01 N 33/36**

(30) Priority: 25.01.85 GB 8501910

(43) Date of publication of application:
**06.08.86 Bulletin 86/32**

(84) Designated Contracting States:
**AT BE CH DE FR GB IT LI LU NL SE**

(71) Applicant: **Haigh-Chadwick Limited**
**Marsh Mills**
**Cleckheaton West Yorkshire(GB)**

(72) Inventor: **Brunnschweiler, David**
**Balderstone Lodge Commons Lane**
**Balderstone Blackburn Lancashire(GB)**

(72) Inventor: **Henderson, Neil Rutherford**
**50 Edgeside Great Harwood**
**Blackburn Lancashire(GB)**

(74) Representative: **McNeight, David Leslie et al,**
**McNeight & Lawrence Regent House Heaton Lane**
**Stockport Cheshire SK4 1BS(GB)**

(54) **Web monitoring arrangement.**

(57) A fibre web monitoring arrangement for travelling card and like webs (11) comprises an elongate light source (12) such as a fluorescent tube arranged transversely of the direction of web travel and, on the opposite side of the web path, a series of spaced apart photosensitive devices (14) illuminated through the web (11) by the light source (12) and indicating means for indicating the level of illumination of the said devices (14) as an indication of web density.

FIG.1

EP 0 189 985 A1

## WEB MONITORING ARRANGEMENT

This invention relates to web monitoring arrangements suitable for travelling card and like webs of fibres.

The photoelectric monitoring of such webs for uniformity of density over a period of time has been proposed, but the available equipment is expensive and yet has considerable shortcomings, so that it has never been adopted in practice to any commercial extent. A major problem has been to allow for variations in the intensity of the light source and the response of the photoelectric device. Accumulation of dust and fly has also been troublesome, interfering with the illumination of the photoelectric device. The available devices have been 'spot' devices looking at only a small area of web. Scanning such a spot probe across a web is certainly done, at least with gamma ray and like devices for thicker webs for example in the paper and board industry. All these measures are expensive, however.

The present invention, by contrast, provides an inexpensive yet perfectly adequate solution to the problems of web monitoring especially for light fibrous webs as from a carding machine.

The invention comprises a web monitoring arrangement for travelling card and like webs comprising an elongate light source arranged transversely of the direction of travel of the web so as to illuminate the web uniformly thereacross and, on the opposite side of the web path, a series of spaced apart photosensitive devices illuminated through the web by the light source and indicating means for indicating the level of illumination of the said devices as an indication of web density.

The light source may comprise a fluorescent tube, which may be provided with a diffuser such as is commercially available for domestic and industrial fluorescent fittings. A fluorescent tube gives a very even illumination end-to-end, and such tubes are commercially available in lengths which span the whole width of a card web of conventional size.

Photodiodes commercially available are inexpensive photoelectric devices which have an adequately time-uniform response. Phototransistors may also be used. Such devices may be spaced apart uniformly across the web path. An ideal spacing for most purposes is about 10cm.

An inexpensive comparison, to allow for variations in time in the brightness of the light source, may comprise photosensitive devices aimed at the light source. It is found adequate if three photosensitive devices - which may be of the same type as or different from - those on the opposite side of the web path - are used to make the comparison signal. Their output signals may be averaged and used as the reference. But if the light source deteriorates too far in terms of total light output (as determined by the average signal) or variations from place to place along the elongate source (as may be determined by taking differences in the outputs of the three photosensitive devices or - with fluorescent sources especially - short time period variations in intensity indicative of pre-breakdown surges.

The indicating means may be adapted to display signals from the devices individually whereby to indicate web density in specific areas. The indicating means may comprise a bar chart display (which may be in liquid crystal display means) having as many channels as there are devices and being arranged correspondingly so as to give a visual indication of density distribution across the web.

The indicating means may also be adapted to integrate signals from the devices so as to give an indication of average web density across the web. An output signal indicative of average web density may be used to control a carding or other machine producing a web so as to maintain the indicated web density constant. In a carding machine, the input feed rollers may be so controlled.

The light source may be situated below the web, which may in any event be arranged to wipe it. Air jet means associated with the photoelectric devices may be adapted to prevent build-up of obscuring material.

One embodiment of a web monitoring arrangement according to the invention will now be described with reference to the accompanying drawings in which:

Figure 1    is a perspective view of part of the arrangement.

Figure 2    is a view of indicating means therefor, and

Figure 3    is a diagrammatic illustration of a control arrangement.

The web monitoring arrangement illustrated in the drawings is intended for a travelling card web 11 and comprises an elongate light source in the form of a fluorescent tube 12 arranged transversely of the direction of travel of the web 11 so as to illuminate the web 11 uniformly thereacross. On the opposite side of the web path, i.e. above it, is arranged on a bar 13 a series of uniformly spaced apart photodiodes 14 illuminated through the web 11 by the tube 12. The tube 12 has a diffuser 15 of conventional type in white plastics material.

Where it is feared that heat from the tube 12 may affect the fibres of the web - when processing wool, for example - the positions of the tube 12 and bar 13 may be interchanged.

On the tube side of the web 11 are arranged three photodiodes 14a aimed at the tube 12 and used in a bridge or other comparison circuit with the photodiodes 14, so that the photodiodes 14 measure the attenuation by the web of the light from the source rather than the brightness of the light falling upon the photodiodes 14.

Although the photodiodes 14 may be expected to be reasonably similar in their characteristics, they may nevertheless display some differences which can, however, be compensated for by calibration.

The photodiodes 14a are also connected so that any significant departure from uniformity or any short term variation such as may be occasioned by surges of current may be detected and an alarm raised, so that the light source may be changed.

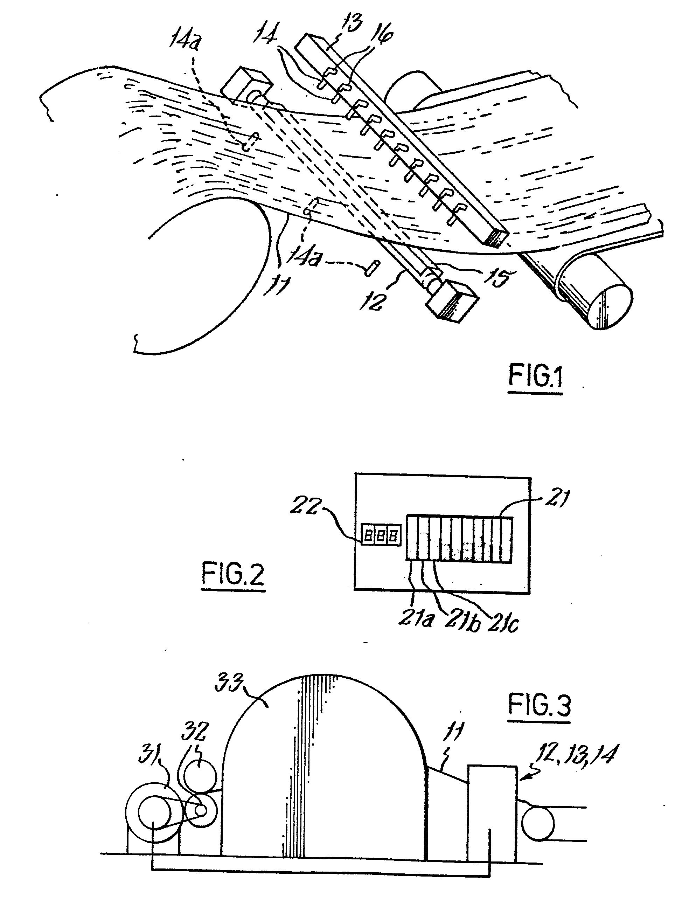

The photodiodes 14 are spaced apart by about 10cms so that there are ten distributed across a one metre card web. Electrically, they are connected individually to an indicating arrangement shown in Figure 2 which has a first display 21 in the form of a liquid crystal display (LCD) bar chart of which each channel 21a, 21b etc. corresponds to one of the photodiodes 14 giving a visual indication of the levelness of web density across the web. A second display 22 is a numeric display for the average web density across the web and this may be calibrated in grams/sq. metre during a setting up operation.

An alternative display arrangement can be provided in the form of a conventional VDU screen split into upper and lower bar charts of which the upper chart has sixty divisions, each bar representing the average web density across the web for one minute intervals, the display progressing each minute to show the immediate past minute's average density on the right hand side.

The lower chart is a bar chart like the bar chart of Figure 2 showing the levelness of web density across the web.

The electronic circuitry involved in the indicating arrangement is conventional and may involve a digital arrangement scanning the photodiodes 14 in turn and evaluating an average by appropriate logic circuitry, and the same of course going for the photodiodes 14a, or it may comprise parallel inputs to an analogue summing device.

The calibration above referred to for compensating for differences in the response characteristics of the photodiodes can involve illuminating the diodes at two different light levels with no web present and noting the output voltages of each photodiode at the two levels of illumination. The reading from each photodiode is subsequently adjusted by a correction factor (assuming the response of each diode to be linear over the illumination range) in the digital electronic circuity.

An output signal representative of the average web density can be passed as shown in Figure 3 to a control for the electric motor drive 31 of the input rollers 32 of a carding machine 33, to speed up said rollers when the web is light and slow then down when the web is heavy in a conventional feed back arrangement.

Trials have shown that this very simple and inexpensive arrangement is very effective at indicating web density.

If assurance is required against dust and fly affecting the operation of the device it can be arranged - as shown, that the web 11 wipes the diffuser 15 and that air jets 16 keep the photodiodes free of dust and fibre accumulation.

If the tube 12 is above the web, it may be arranged that the web travels down an inclined path, say at some $45^{\circ}$ to the horizontal, past the tube 12, the tube 12 and the bar 13 being arranged in a plane perpendicular to said path so that dust tends to fall away from the photodiodes.

## CLAIMS

1.     A web monitoring arrangement for travelling card and like webs comprising an elongate light source arranged transversely of the direction of travel of the web so as to illuminate the web uniformly thereacross and, on the opposite side of the web path, a series of spaced apart photosensitive devices illuminated through the web by the light source and indicating means for indicating the level of illumination of the said devices as an indication of web density.

2.     An arrangement according to claim 1, in which the light source comprises a fluorescent tube extending across the web from side of side thereof.

3.     An arrangement according to claim 2, said fluorescent tube having a diffuser.

4.     An arrangement according to any one of claims 1 to 3, said photosensitive devices comprising photodiodes.

5.     An arrangement according to any one of claims 1 to 4, said photosensitive devices being spaced apart uniformly across the web path.

6.     An arrangement according to claim 5, said photosensitive devices being spaced apart by about 10cm.

7.     An arrangement according to any one of claims 1 to 6, said indicating means being adapted to display signals from said photosensitive devices individually whereby to indicate web density in specific areas.

8.     An arrangement according to claim 7, said indicating means comprising a bar chart display having as many channels as there are photosensitive devices and arranged correspondingly so as to give a visual indication of density distribution across the web.

9.     An arrangement according to claim 8, said bar chart display comprising liquid crystal display means.

10.     An arrangement according to any one of claims 1 to 9, said indicating means being adapted to integrate signals from said photosensitive devices so as to give an indication of average web density across the web.

11.     An arrangement according to any one of claims 1 to 10, in which an output signal indicative of average web density is used to control a carding or other machine producing a web so as to maintain the indicated web density constant.

12.     An arrangement according to claim 11, in which the output signal controls feed rollers supplying fibre to a carding machine.

13.    An arrangement according to any one of claims 1 to 12, in which the light source is situated below the web.

14.    An arrangement according to any one of claims 1 to 13, in which the web is arranged to wipe the light source.

15.    An arrangement according to any one of claims 1 to 14, comprising air jet means associated with the photoelectric devices adapted to prevent build up of obscuring material.

16.    An arrangement according to any one of claims 1 to 15, comprising photodiode calibration means comprising digital electronic circuitry storing data representative of the output voltages of each diode in a test with no web present at two different light levels and applying a correction factor (assuming the response of each diode to be linear over the illumination range).

1/1

FIG.1

FIG.2

FIG.3

| DOCUMENTS CONSIDERED TO BE RELEVANT | | | EP 86300216.8 |
|---|---|---|---|
| Category | Citation of document with indication, where appropriate, of relevant passages | Relevant to claim | CLASSIFICATION OF THE APPLICATION (Int. Cl.4) |
| A | DE - A1 - 3 242 447 (PINIOR)  <br> * Abstract; claims 1,2,18,19; page 8, lines 1-9; page 9, line 28 - page 10, line 4; page 15, line 29 - page 16, line 14; page 17, line 20 - page 18, line 19; fig. 1,2 *  <br> -- | 1,2,4, 5 | G 01 N 21/89 <br> G 01 N 33/36 |
| A | DE - A1 - 2 637 977 (G.A.O.)  <br> * Claims 1-3; page 9, line 23 - page 10, line 30; fig. 1,2 *  <br> -- | 1,4,5, 13 | |
| A | DE - B2 - 2 426 866 (EASTMAN)  <br> * Column 2, lines 11-43; claims; fig. 1-3 *  <br> ---- | 1,4,5, 16 | |
| | | | **TECHNICAL FIELDS SEARCHED (Int. Cl.4)** <br><br> G 01 B 11/00 <br> G 01 N 21/00 |

The present search report has been drawn up for all claims

| Place of search | Date of completion of the search | Examiner |
|---|---|---|
| VIENNA | 28-04-1986 | ERBER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82